(19) Europäisches Patentamt
European Patent Office
Office européen des brevets

(11) **EP 1 182 118 B1**

(12) **EUROPÄISCHE PATENTSCHRIFT**

(45) Veröffentlichungstag und Bekanntmachung des Hinweises auf die Patenterteilung:
**03.01.2007   Patentblatt 2007/01**

(51) Int Cl.:
***B62D 15/02*** *(2006.01)*

(21) Anmeldenummer: **01115134.7**

(22) Anmeldetag: **22.06.2001**

(54) **Verfahren, Computerprogramm und Vorrichtung zur Bestimmung des Lenkwinkels einer Fahrzeuglenkung**

Process, computer program and device for determining the steering angle of a vehicle steering

Procédé, programme informatique et dispositif pour la détermination de l'angle de braquage de la direction d'un véhicule

(84) Benannte Vertragsstaaten:
**DE FR GB IT SE**

(30) Priorität: **18.08.2000   DE 10040372**

(43) Veröffentlichungstag der Anmeldung:
**27.02.2002   Patentblatt 2002/09**

(73) Patentinhaber: **Valeo Schalter und Sensoren GmbH**
**74321 Bietigheim-Bissingen (DE)**

(72) Erfinder:
• **Neckel, Klaus**
  **74343 Sachsenheim (DE)**
• **Ruff, Achim**
  **74354 Besigheim (DE)**
• **Tomar, Roland**
  **74321 Bietigheim-Bissingen (DE)**
• **Weiss, Thomas**
  **74354 Besigheim (DE)**
• **Wigger, Bernd**
  **74366 Kirchheim (DE)**

(74) Vertreter: **Dreiss, Fuhlendorf, Steimle & Becker Patentanwälte,**
**Postfach 10 37 62**
**70032 Stuttgart (DE)**

(56) Entgegenhaltungen:
EP-A- 0 099 797          EP-A- 0 377 097
DE-A- 4 243 778          US-A- 5 129 725

**Beschreibung**

Die vorliegende Erfindung betrifft ein Verfahren zur Bestimmung des Lenkwinkels einer Fahrzeuglenkung, bei dem ein mit einer Lenkwelle verbundenes Codierelement mit einer Codespur an einem den Code der Codespur erfassenden stationären Sensor vorbeibewegt wird.

Ein solches Verfahren wird bei heute üblichen Kraftfahrzeugen eingesetzt. Dabei wird die Position z.B. der Lenkwelle innerhalb einer 360°-Umdrehung durch einen innerhalb dieser Umdrehung eindeutigen Code festgelegt, welcher von dem stationären Sensor erfasst und in einer nachgeordneten Auswerteeinheit ausgewertet wird. Da eine Lenkwellen-Umdrehung von 360° für heute gebräuchliche Kraftfahrzeuge jedoch nicht ausreicht, muss auch bestimmt werden, innerhalb welcher 360°-Umdrehung sich die Lenkwelle gerade befindet. Dies erfolgt im Allgemeinen durch einen am Codierelement befestigten Mitnehmer, der bei jeder vollen 360°-Umdrehung in ein Mitnehmerrad eingreift und dieses um einen bestimmten Betrag weiterbewegt. Diese Bewegung wird ebenfalls erfasst und hierdurch der Lenkwelle eine bestimmte Umdrehung zugeordnet.

Bei dieser mechanischen Sensierung der Umdrehung tritt jedoch bei jedem Auftreffen des Mitnehmers auf dem Mitnehmerrad und bei jedem Umschalten des Mitnehmerrades ein hörbares "Klacken" auf. Gerade bei hochwertigen Fahrzeugen mit auch im Fahrbetrieb sehr geringem Innengeräusch wird ein solches "Klacken" vom Benutzer als störend empfunden. Darüberhinaus ist die aus Mitnehmer und Mitnehmerrad bestehende Einheit einem gewissen Verschleiß unterworfen, der mit der Zeit die Funktionssicherheit der Sensierung der Umdrehungszahl beeinträchtigen kann.

Eine andere Möglichkeit zur mechanischen Sensierung der Umdrehung zeigt die DE 4 243 778 A.

Die vorliegende Erfindung hat daher die Aufgabe, ein Verfahren zur Bestimmung des Lenkwinkels der eingangs genannten Art so weiterzubilden, dass die Sensierung der Umdrehungszahl ohne Geräusch erfolgt und die Funktionssicherheit über die gesamte zu erwartende Lebensdauer des Fahrzeugs gewährleistet ist.

Diese Aufgabe wird dadurch gelöst, dass

a) mindestens zwei in Bewegungsrichtung der Codescheibe nacheinander angeordnete Sensoren dem Code der Codespur entsprechende unterschiedliche Signalzustände einnehmen;

b) die Drehrichtung aus den Anfangssignalzuständen der Sensoren und der Änderung des Signalzustands mindestens eines Sensors bestimmt wird;

c) die Anzahl der Änderungen der Signalzustände mit der jeweiligen Drehrichtung entsprechendem Vorzeichen ausgehend von einem Anfangswert aufsummiert wird; und

d) die Umdrehung der Lenkwelle aus dem Summenergebnis bestimmt wird.

Mit diesem berührungslos arbeitenden Verfahren treten bei der Zählung der Umdrehungen keinerlei Geräusche auf. Darüber hinaus tritt auch kein Verschleiß auf, da sämtliche Maßnahmen, welche zur Bestimmung der tatsächlichen Umdrehung der Lenkwelle erforderlich sind, innerhalb der Ausführung eines Software-Programms durchgeführt werden können.

Ferner gibt es auch keine mechanischen Begrenzungen der maximal zählbaren Umdrehungen, so dass das erfindungsgemäße Verfahren zur Lenkwinkelbestimmung bei unterschiedlichsten Fahrzeugen, insbesondere auch bei Spezialfahrzeugen mit großer Lenkuntersetzung, eingesetzt werden kann.

Vorteilhafte Weiterbildungen sind in Unteransprüchen angegeben.

Bei einer Weiterbildung der Erfindung werden die Signalzustände mindestens zweier Sensoren zu einem gemeinsamen Positionswert verknüpft. Dies hat den Vorteil, dass die Anzahl der zu vearbeitenden Signale reduziert und hierdurch einerseits die Verarbeitungsgeschwindigkeit und andererseits die mögliche Abtastrate erhöht wird.

Eine besonders vorteilhafte Art der Bildung dieses Positionswertes ist in einer anderen Weiterbildung angesprochen, bei der jedem Sensor ein binärer Faktor zugeordnet wird und mit diesem die dem jeweiligen Signalzustand entsprechende binäre Größe berechnet wird und die binären Größen mindestens zweier Sensoren zu einem gemeinsamen Positionswert addiert werden. Unter dem binären Faktor wird der Exponent der binären Basis bezeichnet; die binäre Zahl $2^1$ hätte also den binären Faktor 1. Je nach Signalzustand kann die binäre Basis den Wert 0 oder den Wert 2 einnehmen, woraus sich dann die entsprechenden binären Größen berechnen. Die Verwendung eines derartigen binären Zahlenschemas ist softwaremäßig einfach zu realisieren und ermöglicht eine eindeutige Berechnung des Positionswerts

Erfindungsgemäß kann weiterhin vorgesehen werden, dass aus zwei zeitlich aufeinanderfolgenden Positionswerten die Drehrichtung der Lenkwelle unter Verwendung einer entsprechenden Zuordnungstabelle bestimmt wird. Auch dieser Verfahrensschritt ist softwaremäßig einfach zu realisieren und liefert ohne großen Rechenaufwand eine eindeutige Aussage der Drehrichtung zwischen zwei zeitlich aufeinanderfolgenden Positionswerten.

Die augenblickliche Umdrehung, in welcher sich die Lenkwelle gerade befindet, wird bei einer Weiterbildung des erfindungsgemäßen Verfahrens aus der Anzahl der Änderungen der Positionswerte und der entsprechenden Drehrichtung bestimmt. Wird die Drehrichtung z.B. durch die Vorzeichen "plus" bzw. "minus" definiert, können die Änderungen der Positionswerte einfach mit ihren entsprechenden Vorzeichen aufsummiert werden. Diesem Ergebnis kann dann eine eindeutige augenblickliche Umdrehung der Lenkwelle zugeordnet werden.

Sehr wichtig für die Funktionssicherheit eines Kraftfahrzeugs ist auch, dass die Bestimmung des Lenkwinkels der Fahrzeuglenkung auch bei ausgeschalteter Zündung des Fahrzeugs erfolgt, so dass z. B. nach einem Abschleppen und dem anschließenden Wiederanlassen des Motors eine "Eichung" des Systems nicht erfolgen muss. Dies wird durch eine Weiterbildung des erfindungsgemäßen Verfahrens ermöglicht, bei der die Umdrehung der Lenkwelle in einem vom Betriebszustand des Fahrzeugs unabhängigen Speicher gespeichert wird.

Voraussetzung für die Möglichkeit der Bestimmung des Lenkwinkels der Fahrzeuglenkung auch bei ausgeschalteter Zündung ist natürlich, dass auch die Sensoren unabhängig vom Betriebszustand des Fahrzeugs immer arbeiten. Dies wird dadurch sichergestellt, dass sie ständig an die Fahrzeugbatterie angeschlossen sind. Da deren Kapazität jedoch begrenzt ist, sollten Maßnahmen ergriffen werden, welche den Stromverbrauch durch die Sensoren und die nachgeschaltete Durchführung des erfindungsgemäßen Verfahrens reduzieren. Dies wird durch eine Weiterbildung des erfindungsgemäßen Verfahrens ermöglicht, bei der die Sensoren mit einer Taktrate gepulst betrieben werden, die von den Abständen der Sensoren voneinander und der maximal geforderten Drehgeschwindigkeit der Lenkwelle abhängt. Dabei gilt, dass die Taktrate um so geringer sein kann, je größer die Abstände der Sensoren voneinander sind und je kleiner die maximal geforderte Drehgeschwindigkeit der Lenkwelle ist.

Besonders vorteilhaft ist eine Weiterbildung des Verfahrens, bei der die Signale von mindestens drei Sensoren ausgewertet und einer Plausibilitätsprüfung unterzogen werden und bei der bei einem negativen Ergebnis ein Bit gesetzt wird, welches vorzugsweise zur Auslösung einer Warnmeldung verwendet wird. Im Grunde reichen zwei Sensoren und zwei Sektoren auf der Codespur aus, um den Lenkwinkel der Fahrzeuglenkung zu bestimmen. Die Bestimmung des Lenkwinkels ist jedoch kritisch für die Sicherheit beim Betrieb des Fahrzeugs, so dass eine Redundanz beim Ausfall eines Sensors und/oder die Möglichkeit gefordert ist, einen Fehler eines Sensors zu erkennen. Dies ist bei dem erfindungsgemäßen Verfahren bereits mit den Signalen von drei Sensoren möglich, da die Signale jeweils eines Sensorpaares bereits eine eindeutige Bestimmung der Winkelposition des Codierelementes ermöglichen. Bei abweichenden Ergebnissen der auf den drei Sensorpaaren beruhenden Bestimmungen kann i.S. einer "intelligenten" Logik eine Mehrheitsentscheidung getroffen werden, und es kann dem Benutzer eine Meldung angezeigt werden, welche ihn auf das Problem im Bereich der Lenkwinkelbestimmung hinweist.

Die vorliegenden Erfindung betrifft auch ein Computerprogramm, welches zur Durchführung des oben genannten Verfahrens geeignet ist, wenn es auf einem Computer ausgeführt wird. Dabei ist besonders bevorzugt, wenn das Computerprogramm auf einem Speicher, insbesondere einem Flash-Memory, abgespeichert ist.

Die vorliegende Erfindung betrifft auch eine Vorrichtung zur Bestimmung des Lenkwinkels einer Fahrzeuglenkung mit einer Lenkwelle, einem mit diesem verbundenen Codierelement, welches einem dem Lenkwinkel entsprechenden Code aufweist, und mindestens einem stationären Sensor, der den Code auf dem Codierelement erfasst, dadurch gekennzeichnet, dass sie zur Durchführung des Verfahrens nach einem der Ansprüche 1 - 8 geeignet ist.

Besonders bevorzugt ist dabei eine Weiterbildung der Vorrichtung, bei der das Codierelement eine Spur mit mindestens zwei sich insbesondere über 180° erstreckenden Sektoren aufweist und mindestens zwei Sensoren vorgesehen sind, die relativ zum Verlauf der Codespur nacheinander innerhalb der Winkelerstreckung eines Sektors angeordnet sind. Bereits mit einer solchen sehr einfach aufgebauten Vorrichtung kann das oben beschriebene Verfahren sicher und zuverlässig durchgeführt werden.

Gemäß einer Weiterbildung der Vorrichtung sind drei insbesondere gepulst betriebene Sensoren vorhanden, die in einem Winkelabstand von 60° angeordnet sind. Eine derartige Vorrichtung hat mehrere Vorteile: Zum einen weist sie, wie bereits oben im Zusammenhang mit der Beschreibung des Verfahrens ausgeführt wurde, aufgrund der vorhandenen drei Sensoren eine Redundanz auf, welche die Sicherheit beim Betrieb der Vorrichtung erhöht. Der gepulste Betrieb ermöglicht die Einsparung von Energie, was durch den Winkelabstand von 60° noch weiter verbessert wird, da bei einem solchen Winkelabstand bei gleicher maximal geforderter Drehgeschwindigkeit eine geringere Taktrate notwendig ist.

Eine preisgünstig zu realisierende und technisch einfache Weiterbildung der erfindungsgemäßen Vorrichtung zeichnet sich dadurch aus, dass es sich bei den Sensoren um optische Sensoren handelt und sich die Sektoren durch eine unterschiedliche optische Gestaltung unterscheiden, insbesondere unterschiedliche Farbe aufweisen.

Technisch ebenfalls einfach zu realisieren ist die bei einer anderen Weiterbildung vorgesehene Verknüpfungseinrichtung, die dem jeweiligen Signalzustand entsprechende binäre Größen berechnet. Bei der gleichen Weiterbildung ist auch ein Additionskreis vorgesehen, der die binären Größen mindestens zweier Sensoren zu einem Positionswert addiert.

Andere Weiterbildungen der erfindungsgemäßen Vorrichtung sind in Unteransprüchen angegeben, wobei eine hiervon ein preiswertes ASIC umfasst, in dem die Verknüpfungseinrichtung, der Stapelspeicher, die Speichereinrichtung, die Zähleinrichtung und die Zuordnungtabelle gebildet sind.

Eine andere dieser Weiterbildungen umfasst eine Stromversorgung, welche unabhängig vom Betriebszustand des Fahrzeugs ist. Hierdurch wird die Funktionsfähigkeit der Vorrichtung z.B. auch bei ausgeschalteter Zündung des Fahrzeugs gewährleistet.

Nachfolgend wird ein Ausführungsbeispiel der Erfindung unter Bezugnahme auf die beiliegende Zeichnung im Detail erläutert. In der Zeichnung zeigen:

Figur 1      eine Vorrichtung zur Bestimmung des Lenkwinkels einer Fahrzeuglenkung mit einer Codierscheibe, Sensoren und einer Auswerteeinheit;

Figur 2      ein Diagramm, in dem die Signalzustände der Sensoren von Figur 1 über der Umdrehung einer Lenkwelle dargestellt sind;

Figur 3      drei Tabellen, in denen die Signalzustände der Sensoren von Figur 2 sowie die entsprechenden Positionswerte der drei Sensorpaare dargestellt sind;

Figur 4      eine Tabelle, in welcher die Drehrichtungen der Lenkwelle den Änderungen der Positionswerte zugeordnet sind; und

Figur 5      ein Ablaufdiagramm eines Verfahrens, nach dem die in Figur 1 dargestellte Vorrichtung arbeitet.

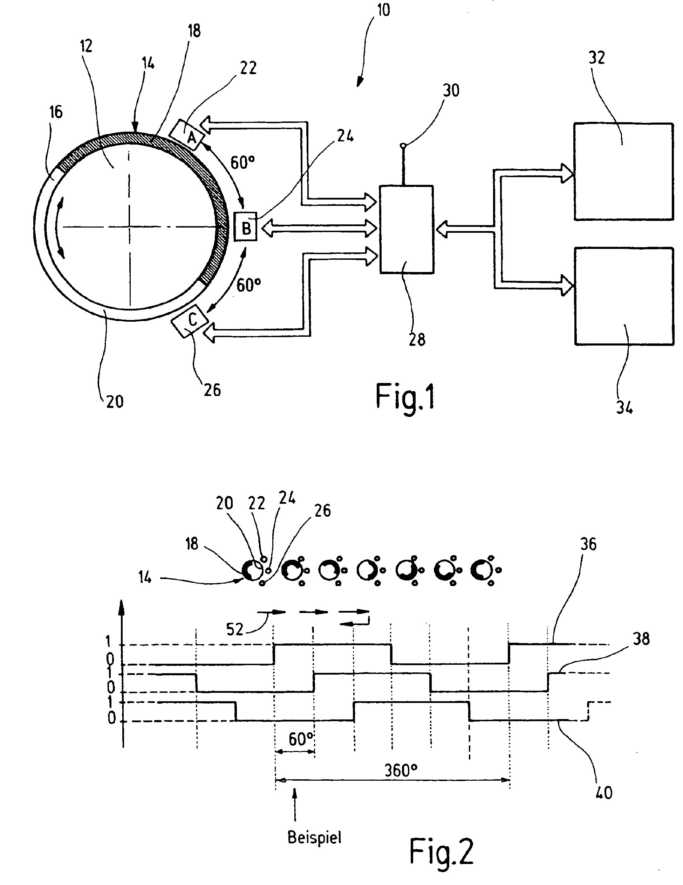

In Figur 1 trägt eine Vorrichtung zur Bestimmung des Lenkwinkels einer Fahrzeuglenkung insgesamt das Bezugszeichen 10. Sie umfasst eine Lenkwelle 12, mit der ein scheibenförmiges Codierelement 14 drehfest verbunden ist. Das Codierelement 14 weist eine Codespur 16 auf, die in zwei Sektoren 18 und 20 unterteilt ist, welche sich jeweils über einen Winkel von 180° erstrecken. Die beiden Sektoren 18 und 20 unterscheiden sich insoweit, als der Sektor 18 schwarz und der Sektor 20 weiß ist.

Dicht benachbart zur Codespur 16, jedoch etwas von dieser beabstandet, sind drei Sensoren 22, 24 und 26 angeordnet. Die Sensoren 22 und 24 sowie die Sensoren 24 und 26 haben jeweils einen Winkelabstand von 60° voneinander, so dass alle drei Sensoren innerhalb eines 180°-Sektors angeordnet sind. Bei den Sensoren 22, 24 und 26 handelt es sich um optische Sensoren, welche jeweils ein lichtaussendendes und ein das von der Codespur 16 reflektierte Licht empfangendes Element aufweisen (diese beiden Elemente sind in Figur 1 nicht dargestellt).

Die drei Sensoren 22, 24 und 26 leiten Signale an ein ASIC 28 weiter, welches mit einer vom Betriebszustand des Fahrzeugs unabhängigen Stromversorgung 30 verbunden ist. Das ASIC 28 ist wiederum mit zwei Mikroprozessoren 32 und 34 verbunden.

Das Verfahren, nach dem die in Figur 1 dargestellte Vorrichtung 10 arbeitet, wird nun unter Bezugnahme auf die Figuren 2 - 5 erläutert:

In Figur 2 sind Signalzustände 36, 38 und 40 der einzelnen Sensoren 22, 24 und 26 bei unterschiedlichen Winkelstellungen der Lenkwelle 12 und des mit ihr verbundenen Codierelements 14 dargestellt. Die den einzelnen Signalzuständen 36, 38, 40 der Sensoren 22, 24 und 26 entsprechenden Positionen des Codierelements 14 sind in Figur 2 im oberen Bereich symbolisch dargestellt. In dem in Figur 2 ganz links dargestellten Ausgangszustand sind alle Sensoren 22, 24 und 26 im Bereich des weißen Sektors 20 des Codierelements 14 angeordnet, so dass deren Signalzustände 36, 38, 40 alle den Wert 0 haben. Wird das Codierelement 14 nun im Uhrzeigersinn bewegt, liegt, nach einer 60°-Drehung des Codierelements 14, der Sensor 22 im Bereich des schwarzen Sektors 18, wohingegen sich die Sensoren 24 und 26 weiterhin im Bereich des weißen Sektors 20 befinden. Der Signalzustand 36 des Sensors 22 nimmt daher nun den Wert 1 an, wohingegen die Signalzustände 38, 40 der Sensoren 24 und 26 weiterhin gleich 0 sind.

Bei einer weiteren Drehung des Codierelements 14 im Uhrzeigersinn um 60° gerät auch der Sensor 24 in den Bereich des schwarzen Sektors 18, so dass auch dessen Signalzustand 38 nun den Wert 1 annimmt. Nach einer weiteren 60°-Drehung des Codierelements 14 im Uhrzeigersinn befinden sich sämtliche Sensoren 22, 24 und 26 im Bereich des schwarzen Sektors 18 der Codespur 16 auf dem Codierelement 14, so dass die Signalzustände 36, 38 und 40 der Sensoren 22, 24 und 26 alle den Wert 1 annehmen.

Bei einer weiteren Drehung des Codierelements 14 im Uhrzeigersinn nehmen nacheinander die Signalzustände 36, 38 und 40 wieder den Wert 0 an.

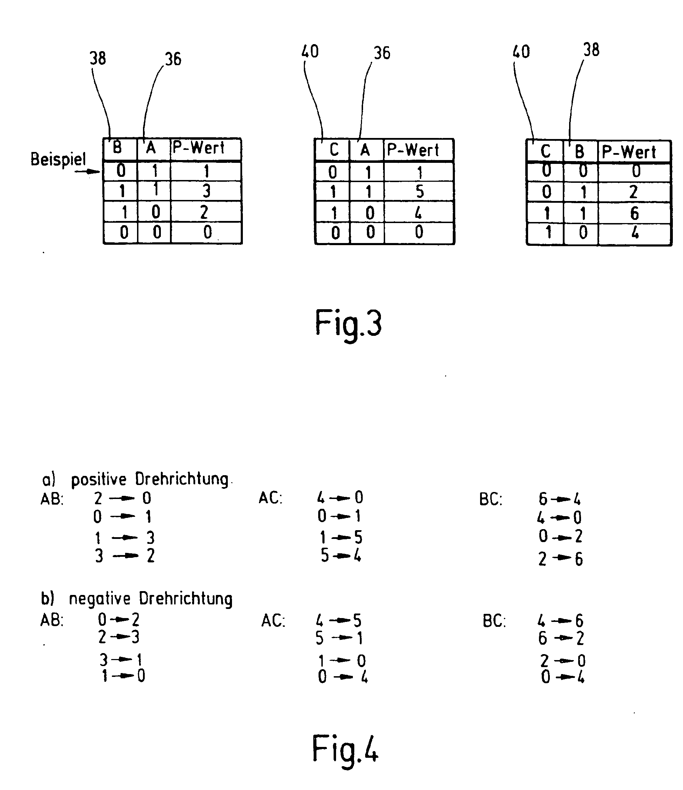

In den in Figur 3 dargestellten drei Tabellen werden aus den Signalzuständen 36 und 38 des Sensorpaars 22 und 24, den Signalzuständen 36 und 40 des Sensorpaars 22 und 26 und aus den Signalzuständen 38 und 40 des Sensorpaars 24 und 26 die jeweiligen Positionswerte berechnet. Diese Berechnung erfolgt auf der Basis des binären Zahlensystems:

Jedem Sensor ist ein binärer Faktor zugeordnet, worunter der Exponent der binären Basis 2 verstanden wird. Der Sensor 22 hat z.B. im vorliegenden Falle den binären Faktor 0, der Sensor 24 den binären Faktor 1 und der Sensor 26 den binären Faktor 2. Der Positionswert eines Sensorpaares A, B errechnet sich nach folgender Formel:

$$\text{P-Wert} = \text{Sig.Zustand (Sens. A)} \times 2^{\text{bin Fakt.(Sens.A)}} + \text{Sig.Zust.}$$
$$\text{(Sens. B)} \times 2^{\text{bin Fakt.(Sens.B)}}.$$

Im Falle des obersten Wertepaares der in Figur 3 linken Tabelle hat der Signalzustand 36 des Sensors 22 den Wert 1 und der Signalzustand 38 des Sensors 24 den Wert 0. Entsprechend der oben genannten Formel errechnet sich der Positionswert des Codierelements 14 für dieses erste Wertepaar der beiden Sensoren 22 und 24 wie folgt:

$$\text{P-Wert} = 1 \times 2^{0 \cdot 1} = 1.$$

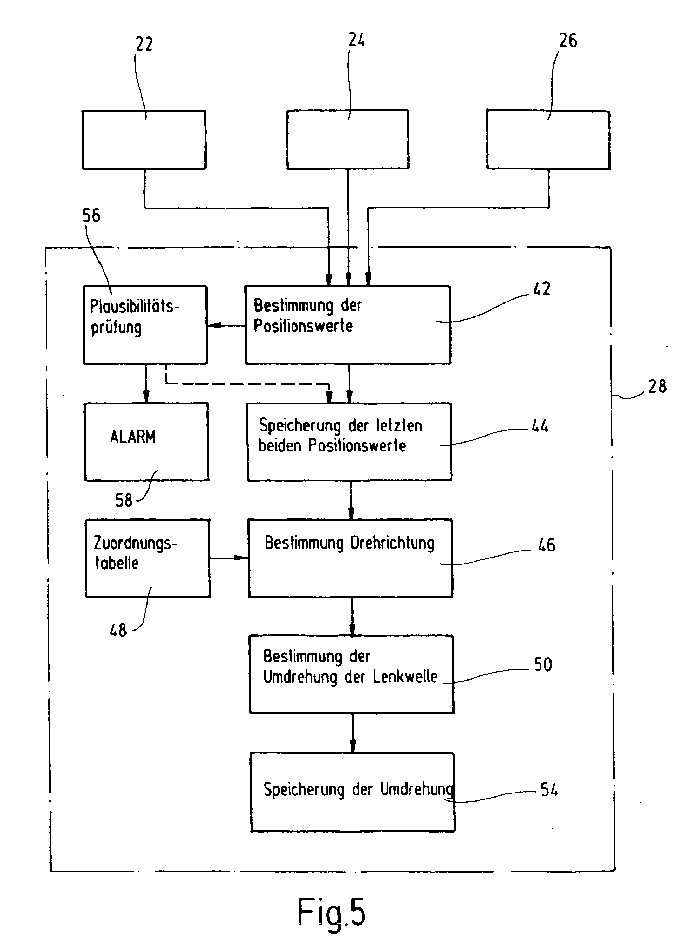

Diese Berechnung wird auch für die beiden anderen Sensorpaare 22 und 26 sowie 24 und 26 durchgeführt, entsprechend der mittleren und der rechten Tabelle in Figur 3. In dem in Figur 5 dargestellten Ablaufdiagramm entspricht die Berechnung der Positionswerte dem Block 42.

Die beiden zeitlich letzten Positionswerte eines Sensorpaares 22 und 24, 22 und 26 bzw. 24 und 26 werden entsprechend dem Ablaufdiagramm in Figur 5 in Block 44 in einem Stapelspeicher (ohne Bezugszeichen) abgespeichert. In einem solchen Stapelspeicher wird bei einem Speichervorgang der zeitlich älteste Wert durch einen jüngeren ersetzt und der jüngere Wert durch einen aktuellen Positionswert ersetzt. Auf diese Weise benötigt ein solcher Speicher pro Sensorpaar 22 und 24 bzw. 22 und 26 bzw. 24 und 26 jeweils nur zwei Speicherplätze, in denen der aktuelle Positionswert sowie der vorhergehende Positonswert abgespeichert sind.

Nun erfolgt die Bestimmung der Drehrichtung der Codierscheibe, was in Figur 5 durch den Block 46 dargestellt ist. Hierzu wird auf eine Zuordnungstabelle 48 zugegriffen, in der den in den jeweiligen Stapelspeichern abgelegten Wertepaaren für die Positionswerte eine entsprechende Drehrichtung zugeordnet ist. Eine solche Zuordnungstabelle ist in Figur 4 dargestellt:

Ist z.B. für das Sensorpaar 22 und 24 der ältere Positionswert 2 und der jüngere Positionswert 0, bedeutet dies, dass das Codierelement 14 im Uhrzeigersinn gedreht wurde, also eine nach der Definition der Zuordnungstabelle 48 positive Drehrichtung aufweist. Ist dagegen der zeitlich ältere Wert dieses Wertepaares 0 und der jüngere Wert 2, deutet dies auf eine Drehung des Codierelements 14 entgegen dem Uhrzeigersinn hin, dieses hat also eine negative Drehrichtung.

Im weiteren Verlauf des Verfahrens, mit dem der Lenkwinkel der Lenkwelle 12 bestimmt wird, wird die Anzahl der Änderungen eines Positionswerts mit dem im vorhergehenden Schritt 46 bestimmten Vorzeichen aufsummiert. Da aufgrund des Winkelabstands der Sensoren 22, 24 und 26 und aufgrund der Winkelerstreckung der beiden Sektoren 18 und 20 der Codespur 16 des Codierelements 14 bekannt ist, dass eine Änderung eines Positionswerts jeweils bei einer Drehung des Codierelements 14 bzw. der Lenkwelle 12 um 60° erfolgt, kann aus der Anzahl der Änderungen der Positionswerte unter Berücksichtigung des der jeweiligen Drehrichtung entsprechenden Vorzeichens auf die aktuelle Umdrehung der Lenkwelle 12 geschlossen werden. Dies erfolgt in Figur 5 im Block 50. Werden z.B., ausgehend von der in Figur 2 äußersten linken Position der Codierscheibe 14, insgesamt vier Änderungen der Positionswerte gezählt, von denen drei mit einem positiven und eine mit einem negativen Vorzeichen behaftet sind (entsprechend den Pfeilen 52 in Figur 2), befindet sich das Codierelement 14 schließlich in einer um 120° im Uhrzeigersinn gegenüber der Ausgangsstellung verdrehten Position und somit noch innerhalb der Ausgangsumdrehung. Es sei also in dieser Stelle nochmals ausdrücklich darauf hingewiesen, dass die Positionswerte nicht direkt zu einer Bestimmung der Winkelposition des Codierelements 14 herangezogen werden, sondern dass aus einer Änderung eines Positionswertes auf eine Winkelbewegung des Codierelements 14 um einen bestimmten Winkelbereich und auf die entsprechende Drehrichtung geschlossen wird und dass die Umdrehung, in welcher sich das Codierelement 14 befindet, aus der Aufsummierung der Winkeländerungen mit dem der Drehrichtung entsprechenden Vorzeichen bestimmt wird.

Die jeweils aktuelle Umdrehung, in welcher sich das Codierelement 14 und die mit ihm verbundene Lenkwelle 12 befinden, wird in Figur 5 im Block 54 abgespeichert, so dass sie zu jedem Zeitpunkt von den Mikroprozessoren 32 und 34 ausgelesen werden kann. Mit den Mikroprozessoren 32 und 34 wird unter Verwendung der Signale von anderen Einrichtungen die exakte Winkelposition der Lenkwelle 12 bestimmt und unter Berücksichtigung der gemäß dem obigen Verfahren bestimmten Umdrehung, in welcher sich die Lenkwelle 12 befindet, der tatsächliche Lenkausschlag berechnet. Dieser Lenkausschlag kann dann von den Mikroprozessoren 32 bzw. 34 z.B. für die Bestimmung elektronischer Stabilitätsmaßnahmen am Fahrzeug verwendet werden.

Wie aus den obigen Ausführungen hervorgeht, würden bereits die Positionswerte eines Sensorpaares ausreichen, um eine Winkelbewegung des Codierelements 14 zu erfassen und die entsprechende Drehrichtung zu bestimmen. Durch die Hinzufügung nur eines weiteren Sensors können jedoch auf einfache Weise jeweils drei einer Winkelstellung des Codierelements 14 ensprechende Positionswerte bestimmt werden, und diese können in einem Block 56 auf ihre Plausibilität überprüft werden. Haben z.B. die Signalzustände 36 und 40 der beiden Sensoren 22 und 26 den Wert 1, kann der Signalzustand 38 des Sensors 24 nicht den Wert 0 annehmen. Tut er dies doch, muss von einer Fehlfunktion ausgegangen werden. Im Block 58 in Figur 5 wird daher ein Alarm erzeugt, der dem Benutzer anzeigt, dass eine Fehlfunktion bei der Lenkwinkelbestimmung vorliegt. Gleichzeitig wird jedoch innerhalb der Plausibilitätsprüfung im Block 56 eine "Mehrheitsentscheidung" getroffen, die im vorliegenden Beispiel den Signalzustand 38 des Sensors 24 als "fehlerhaft" kennzeichnet. Für die Bestimmung der Umdrehung, in welcher sich das Codierelement 14 befindet, werden in diesem Fall also nur die Positionswerte verwendet, welche aus den Signalzuständen 36 und 40 der beiden Sensoren 22 und 26 berechnet wurden.

Es versteht sich, dass die Bestimmung der Umdrehung, in welcher sich das Codierelement 14 und mit ihm die Lenkwelle 12 befinden, immer auf der Basis eines Ausgangszustandes erfolgt. Wurde der Speicher, in dem die aktuelle Umdrehung abgespeichert ist, z.B. dadurch gelöscht, dass die Batterie des Fahrzeugs abgeklemmt wurde, muss beim Wiederanklemmen der Batterie die Lenkung in eine bestimmte Ausgangsposition gebracht werden, z.B. in die Mittelstellung.

**Patentansprüche**

1. Verfahren zur Bestimmung des Lenkwinkels einer Fahrzeuglenkung, bei dem ein mit einer Lenkwelle (12) verbundenes Codierelement (14) mit einer Codespur (16) an mindestens einem den Code der Codespur (16) erfassenden stationären Sensor (22, 24, 26) vorbeibewegt wird,
   **dadurch gekennzeichnet, dass**

   a) mindestens zwei in Bewegungsrichtung des Codierelements (14) nacheinander angeordnete Sensoren (22, 24, 26) dem Code der Codespur (16) entsprechende unterschiedliche Signalzustände (36, 38, 40) einnehmen,
   b) die Drehrichtung aus den Anfangssignalzuständen (36, 38, 40) der Sensoren (22, 24, 26) und der Änderung des Signalzustands (36, 38, 40) mindestens eines Sensors (22, 24, 26) bestimmt wird,
   c) die Anzahl der Änderungen der Signalzustände (36, 38, 40) mit der jeweiligen Drehrichtung entsprechendem Vorzeichen ausgehend von einem Anfangswert aufsummiert wird, und
   d) die augenblickliche Umdrehungszahl der Lenkwelle (12) aus dem Summenergebnis bestimmt wird.

2. Verfahren nach Anspruch 1, **dadurch gekennzeichnet, dass** die Signalzustände (36, 38, 40) mindestens zweier Sensoren (22, 24, 26) zu einem gemeinsamen Positionswert verknüpft werden.

3. Verfahren nach Anspruch 2, **dadurch gekennzeichnet, dass** jedem Sensor ein binärer Faktor zugeordnet, mit diesem die dem jeweiligen Signalzustand (36, 38, 40) entsprechende binäre Größe berechnet und die binären Größen mindestens zweier Sensoren (22, 24, 26) zu einem gemeinsamen Positionswert addiert werden.

4. Verfahren nach einem der Ansprüche 2 oder 3, **dadurch gekennzeichnet, dass** aus zwei zeitlich aufeinanderfolgenden Positionswerten die Drehrichtung der Lenkwelle (12) unter Verwendung einer entsprechenden Zuordnungstabelle (48) bestimmt wird.

5. Verfahren nach Anspruch 4, **dadurch gekennzeichnet, dass** aus der Anzahl der Änderungen der Positionswerte und der entsprechenden Drehrichtung die augenblickliche Umdrehungszahl der Lenkwelle (12) bestimmt wird.

6. Verfahren nach Anspruch 5, **dadurch gekennzeichnet, dass** die augenblickliche Umdrehungszahl der Lenkwelle (12) in einem vom Betriebszustand des Fahrzeugs unabhängigen Speicher gespeichert wird.

7. Verfahren nach einem der vorhergehenden Ansprüche, **dadurch gekennzeichnet, dass** die Sensoren (22, 24, 26) mit einer Taktrate gepulst betrieben werden, die von den Abständen der Sensoren (22, 24, 26) voneinander und der maximal geforderten Drehgeschwindigkeit der Lenkwelle (12) abhängt.

8. Verfahren nach einem der vorhergehenden Ansprüche, **dadurch gekennzeichnet, dass** die Signale von mindestens drei Sensoren (22, 24, 26) ausgewertet und einer Plausibilitätsprüfung unterzogen werden und bei einem negativen Ergebnis ein Bit gesetzt wird, welches vorzugsweise zur Auslösung einer Warnmeldung verwendet wird.

9. Computerprogramm, **dadurch gekennzeichnet, dass** es zur Durchführung des Verfahrens nach einem der vorhergehenden Ansprüche geeignet ist, wenn es auf einem Computer ausgeführt wird.

10. Computerprogramm nach Anspruch 9, **dadurch gekennzeichnet, dass** es auf einem Speicher, insbesondere einem Flash-Memory, abgespeichert ist.

11. Vorrichtung zur Bestimmung des Lenkwinkels einer Fahrzeuglenkung mit einer Lenkwelle (12), einem mit dieser verbundenen Codierelement (14), welches einen dem Lenkwinkel entsprechenden Code (16) aufweist, und mindestens zwei stationären Sensoren (22, 24, 26), der den Code (16) auf dem Codierelement (14) erfasst, **dadurch gekennzeichnet, dass** sie zur Durchführung des Verfahrens nach einem der Ansprüche 1 bis 8 geeignet ist.

12. Vorrichtung nach Anspruch 11, **dadurch gekennzeichnet, dass** das Codierelement (14) eine Codespur (16) mit mindestens zwei sich insbesondere über 180 Grad erstreckenden Sektoren (18, 20) aufweist und mindestens zwei Sensoren (22, 24, 26) vorgesehen sind, die relativ zum Verlauf der Codespur (16) nacheinander innerhalb der Winkelerstreckung eines Sektors (18, 20) angeordnet sind.

13. Vorrichtung nach einem der Ansprüche 11 oder 12, **dadurch gekennzeichnet, dass** drei insbesondere gepulst betriebene Sensoren (22, 24, 26) vorhanden sind, die vorzugsweise in einem Winkelabstand von 60 Grad angeordnet sind.

14. Vorrichtung nach einem der Ansprüche 11 bis 13, **dadurch gekennzeichnet, dass** es sich bei den Sensoren um optische Sensoren (22, 24, 26) handelt und sich die Sektoren (18, 20) durch eine unterschiedliche optische Gestaltung unterscheiden, insbesondere unterschiedliche Farbe aufweisen.

15. Vorrichtung nach Anspruch 14, **dadurch gekennzeichnet, dass** jedem Sensor (22, 24, 26) eine binärer Faktor zugeordnet ist, eine Verknüpfungseinrichtung die dem jeweiligen Signalzustand entsprechenden binären Größen berechnet und ein Additionskreis vorgesehen ist, der die binären Größen mindestens zweier Sensoren zu einem Positionswert addiert.

16. Vorrichtung nach Anspruch 15, **dadurch gekennzeichnet, dass** sie einen Stapelspeicher aufweist, in dem immer die beiden zeitlich letzten Positionswerte speicherbar sind.

17. Vorrichtung nach einem der Ansprüche 14 bis 16, **dadurch gekennzeichnet, dass** sie eine Zuordnungstabelle (48) umfasst, in der zwei zeitlich aufeinanderfolgenden Positionswerten eine entsprechende Drehrichtung der Lenkwelle (12) zugeordnet ist.

18. Vorrichtung nach Anspruch 17, **dadurch gekennzeichnet, dass** sie eine Zähleinrichtung (50) umfasst, die aus der Anzahl der Änderungen der Positionswerte und der Drehrichtung ausgehend von einem Anfangswert die augenblickliche Umdrehungszahl der Lenkwelle (12) bestimmt.

19. Vorrichtung nach Anspruch 18, **dadurch gekennzeichnet, dass** sie eine Speichereinrichtung (54) umfasst, in dem der Wert für die augenblickliche Umdrehungszahl speicherbar ist.

20. Vorrichtung nach einem der Ansprüche 11 bis 19, **dadurch gekennzeichnet, dass** sie ein ASIC (28) umfasst, in dem die Verknüpfungseinrichtung, der Stapelspeicher, die Speichereinrichtung (54), die Zähleinrichtung (50) und die Zuordnungstabelle (48) gebildet sind.

21. Vorrichtung nach einem der Ansprüche 11 bis 20, **dadurch gekennzeichnet, dass** sie eine Stromversorgung (30) umfasst, welche unabhängig vom Betriebszustand des Fahrzeugs ist.

**Claims**

1. Method for determining the steering angle of a vehicle steering, wherein an encoding element (14) linked to a steering column (12) and having a code track (16) is moved past at least one stationary sensor (22, 24, 26) detecting the code of the code track (16), **characterised in that**

   a) at lest two sensors (22, 24, 26) arranged one after the other in the movement direction of the encoding element (14) assume different signal states (36, 38, 40) corresponding to the code of the code track (16),

b) the rotation direction is determined from the initial signal states (36, 38, 40) of the sensors (22, 24, 26) and the change in the signal state (36, 38, 40) of at least one of the sensors (22, 24, 26),

c) the number of changes of the signal states (36, 38, 40) with signs corresponding to the respective rotation direction beginning from an initial value is added up, and

d) the current revolution count of the steering column (12) is determined from the addition result.

2. Method according to claim 1, **characterised in that** the signal states (36, 38, 40) of at least two sensors (22, 24, 26) are linked to give a joint position value.

3. Method according to claim 2, **characterised in that** a binary factor is assigned to each sensor, with said factor the binary value corresponding to the respective signal state (36, 38, 40) is calculated and the binary values of at least two sensors (22, 24, 26) are added to give a joint position value.

4. Method according to one of the claims 2 or 3, **characterised in that** from two temporally successive position values, the rotation direction of the steering shaft (12) is determined using a corresponding allocation table (48).

5. Method according to claim 4, **characterised in that**, from the number of changes in the position values and the corresponding rotation direction, the current revolution count of the steering column (12) is determined.

6. Method according to claim 5, **characterised in that** the current revolution count of the steering shaft (12) is stored in a memory which is independent of the operating state of the vehicle.

7. Method according to one of the preceding claims, **characterised in that** the sensors (22, 24, 26) are operated pulsed at a clock rate that depends on the separation of the sensors (22, 24, 26) from one another and the maximum required rotation speed of the steering column (12).

8. Method according to one of the preceding claims, **characterised in that** the signals from at least three sensors (22, 24, 26) are evaluated and subjected to plausibility checking and, given a negative result, a bit is set which is preferably used for triggering a warning signal.

9. Computer program, **characterised in that** it is suitable for carrying out the method according to one of the preceding claims when it is executed on a computer.

10. Computer program according to claim 9, **characterised in that** it is stored in a memory, in particular a flash memory.

11. Device for determining the steering angle of a vehicle steering with a steering shaft (12), an encoding element (14) linked to said steering shaft, which has a code (16) corresponding to the steering angle, and at least two stationary sensors (22, 24, 26) which detect the code (16) on the encoding element (14), **characterised in that** it is suitable for carrying out the method according to one of the claims 1 to 8.

12. Device according to claim 11, **characterised in that** the encoding element (14) has a code track (16) with at least two sectors (18, 20) extending, in particular, over 180° and at least two sensors (22, 24, 26) are provided which are arranged one after the other relative to the course of the code track (16) within the angular extent of a sector (18, 20).

13. Device according to one of the claims 11 or 12, **characterised in that** three sensors (22, 24, 26) operated, in particular, pulsed are available, which preferably are arranged at an angular separation of 60°.

14. Device according to one of the claims 11 to 13, **characterised in that** the sensors are optical sensors (22, 24, 26) and the sectors (18, 20) differ by having different optical designs, in particular different colours.

15. Device according to claim 14, **characterised in that** a binary factor is assigned to each sensor (22, 24, 26), a linking device which calculates the binary values representing the respective signal state and an adding circuit are provided, said adding circuit adding the binary values of at least two sensors to give a position value.

16. Device according to claim 15, **characterised in that** it has a stack in which always the two temporally last position values can be stored.

17. Device according to one of the claims 14 to 16, **characterised in that** it comprises an allocation table (48) in which a corresponding rotation direction of the steering column (12) is allocated to two temporally sequential position values.

18. Device according to claim 17, **characterised in that** it comprises a counter device (50) which determines the current revolution count of the steering column (12) from the number of changes of the position values and the rotation direction beginning from an initial value.

19. Device according to claim 18, **characterised in that** it comprises a memory device (54) in which the value of the current revolution count can be stored.

20. Device according to one of the claims 11 to 19, **characterised in that** it comprises an ASIC (28) in which the linking device, the stack, the memory device (54), the counter device (50) and the allocation table (48) are formed.

21. Device according to one of the claims 11 to 20, **characterised in that** it comprises a power supply (30) which is independent of the operating state of the vehicle.

**Revendications**

1. Procédé pour déterminer l'angle de braquage d'une direction de véhicule, dans lequel un élément de codage (14) relié à un arbre de direction (12) est déplacé avec une piste de code (16) en passant devant au moins un capteur (22, 24, 26) fixe, saisissant le code de la piste de code (16), **caractérisé en ce que**

   a) au moins deux capteurs (22, 24, 26) disposés l'un derrière l'autre dans le sens de déplacement de l'élément de codage (14) occupent différents états de signal (36, 38, 40) correspondant au code de la piste de code (16),
   b) le sens de rotation est déterminé à partir des états de signal de départ (36, 38, 40) des capteurs (22, 24, 26) et de la variation de l'état de signal (36, 38, 40) d'au moins un capteur (22, 24, 26)
   c) le nombre des variations des états de signal (36, 38, 40) est cumulé avec le signe correspondant au sens de rotation respectif à partir d'une valeur initiale, et
   d) le nombre de rotation instantané de l'arbre de direction (12) est déterminé à partir du résultat de la somme.

2. Procédé selon la revendication 1, **caractérisé en ce que** les états de signal (36, 38, 40) d'au moins deux capteurs (22, 24, 26) sont associés pour former une valeur de position commune.

3. Procédé selon la revendication 2, **caractérisé en ce qu'**à chaque capteur est attribué un facteur binaire, avec lequel la grandeur binaire correspondant à l'état de signal (36, 38, 40) respectif est calculé et les grandeurs binaires d'au moins deux capteurs (22, 24, 26) sont ajoutées pour former une valeur de position commune.

4. Procédé selon l'une quelconque des revendications 2 ou 3, **caractérisé en ce que** le sens de rotation de l'arbre de direction (12) est déterminé à partir de deux valeurs de position consécutives dans le temps en utilisant un tableau d'attribution (48) approprié.

5. Procédé selon la revendication 4, **caractérisé en ce que** le nombre de rotations instantané de l'arbre de direction (12) est déterminé à partir du nombre des variations des valeurs de position et du sens de rotation correspondant.

6. Procédé selon la revendication 5, **caractérisé en ce que** le nombre de rotations instantané de l'arbre de direction (12) est mémorisé dans une mémoire indépendante de l'état de service du véhicule.

7. Procédé selon l'une quelconque des revendications précédentes, **caractérisé en ce que** les capteurs (22, 24, 26) sont exploités pulsés avec un taux de cadence qui dépend des espacements des capteurs (22, 24, 26) et de la rotation maximale exigée de l'arbre de direction (12).

8. Procédé selon l'une quelconque des revendications précédentes, **caractérisé en ce que** les signaux d'au moins trois capteurs (22, 24, 26) sont analysés et sont soumis à un contrôle de vraisemblance et dans le cas d'un résultat négatif, on place un bit qui est utilisé de préférence pour le déclenchement d'un message d'alerte.

9. Programme informatique, **caractérisé en ce qu'**il est approprié pour mettre en oeuvre le procédé selon l'une quelconque des revendications précédentes, lorsqu'il est exécuté sur un ordinateur.

**10.** Programme informatique selon la revendication 9, **caractérisé en ce qu'**il est stocké sur une mémoire, en particulier une mémoire flash.

**11.** Dispositif pour déterminer l'angle de braquage d'une direction de véhicule avec un arbre de direction (12), un élément de codage (14) relié à cet arbre, qui présente un code (16) correspondant à l'angle de braquage, et au moins deux capteurs (22, 24, 26) fixes, qui enregistre le code (16) sur l'élément de codage (14), **caractérisé en ce qu'**il est approprié pour mettre en oeuvre le procédé selon l'une quelconque des revendications 1 à 8.

**12.** Dispositif selon la revendication 11, **caractérisé en ce que** l'élément de codage (14) présente une piste de code (16) avec au moins deux secteurs (18, 20) s'étendant en particulier sur 180 degrés et il est prévu au moins deux capteurs (22, 24, 26), qui sont disposés par rapport au tracé de la piste de code (16) l'un derrière l'autre à l'intérieur de l'étirement angulaire d'un secteur (18, 20).

**13.** Dispositif selon l'une quelconque des revendications 11 ou 12, **caractérisé en ce que** trois capteurs (22, 24, 26) exploités en particulier de façon pulsée sont présents, lesquels sont disposés de préférence à une distance angulaire de 60 degrés.

**14.** Dispositif selon l'une quelconque des revendications 11 à 13, **caractérisé en ce que**, en ce qui concerne les capteurs, il s'agit de capteurs (22, 24, 26) optiques et les secteurs (18, 20) se différencient par une conception optique différente, en particulier présentent une couleur différente.

**15.** Dispositif selon la revendication 14, **caractérisé en ce qu'**à chaque capteur (22, 24, 26) est attribué un facteur binaire, il est prévu un dispositif d'association qui calcule des grandeurs binaires correspondant à l'état de signal respectif et un circuit d'addition qui additionne les grandeurs binaires d'au moins deux capteurs pour former une valeur de position.

**16.** Dispositif selon la revendication 15, **caractérisé en ce qu'**il présente une mémoire d'empilement dans laquelle les deux dernières valeurs de position dans le temps peuvent être mémorisées.

**17.** Dispositif selon l'une quelconque des revendications 14 à 16, **caractérisé en ce qu'**il comprend un tableau d'attribution (48), dans lequel un sens de rotation approprié de l'arbre de direction (12) est attribué à des valeurs de position consécutives dans le temps.

**18.** Dispositif selon la revendication 17, **caractérisé en ce qu'**il comprend un dispositif de comptage (50) qui détermine le nombre de rotations instantané de l'arbre de direction (12) à partir du nombre des variations des valeurs de position et du sens de rotation.

**19.** Dispositif selon la revendication 18, **caractérisé en ce qu'**il comprend un dispositif de mémorisation (54) dans lequel la valeur pour le nombre de rotations instantané peut être mémorisée.

**20.** Dispositif selon l'une quelconque des revendications 11 à 19, **caractérisé en ce qu'**il comprend un ASIC (28), dans lequel le dispositif d'association, la mémoire d'empilement, le dispositif de mémorisation (54), le nombre de comptage (50) et le tableau d'attribution (48) sont formés.

**21.** Dispositif selon l'une quelconque des revendications 11 à 20, **caractérisé en ce qu'**il comprend une alimentation électrique (30) qui est indépendante de l'état de service du véhicule.

Fig.1

Fig.2

Beispiel

| B | A | P-Wert |
|---|---|--------|
| 0 | 1 | 1 |
| 1 | 1 | 3 |
| 1 | 0 | 2 |
| 0 | 0 | 0 |

Beispiel →

38   36

| C | A | P-Wert |
|---|---|--------|
| 0 | 1 | 1 |
| 1 | 1 | 5 |
| 1 | 0 | 4 |
| 0 | 0 | 0 |

40   36

| C | B | P-Wert |
|---|---|--------|
| 0 | 0 | 0 |
| 0 | 1 | 2 |
| 1 | 1 | 6 |
| 1 | 0 | 4 |

40   38

## Fig.3

a) positive Drehrichtung

AB:  2 → 0
     0 → 1
     1 → 3
     3 → 2

AC:  4 → 0
     0 → 1
     1 → 5
     5 → 4

BC:  6 → 4
     4 → 0
     0 → 2
     2 → 6

b) negative Drehrichtung

AB:  0 → 2
     2 → 3
     3 → 1
     1 → 0

AC:  4 → 5
     5 → 1
     1 → 0
     0 → 4

BC:  4 → 6
     6 → 2
     2 → 0
     0 → 4

## Fig.4

22 24 26

56

| Plausibilitäts-prüfung | Bestimmung der Positionswerte | 42 |

28

| ALARM | Speicherung der letzten beiden Positionswerte | 44 |

58

| Zuordnungs-tabelle | Bestimmung Drehrichtung | 46 |

48

Bestimmung der Umdrehung der Lenkwelle — 50

Speicherung der Umdrehung — 54

## Fig.5